# EUROPEAN PATENT APPLICATION

(11) **EP 2 557 339 A1**
(43) Date of publication of application: **13.02.2013**
(21) Application number: 12179302.0
(22) Date of filing: 03.08.2012
(51) Int. Cl.: F16J 15/32, F16J 15/44

(54) **Self-adjusting seal**

(30) Priority: 08.08.2011 US 201113204872
(71) Applicant: General Electric Company, Schenectady, NY 12345 (US)
(72) Inventor: Rai, Mandar Ranganath, 500081 Hyderabad (IN); Mahajan, Sachin Vitthal, 500081 Hyderabad (IN); Namannavar, Gireesh Anantacharya, 500081 Hyderabad (IN)
(74) Representative: Picker, Madeline Margaret

(57) **Abstract**

A sealing system that self-adjusts according to atmospheric conditions is disclosed. The sealing system includes an annular seal (100) casing mounted on a stationary component (104), the annular seal (100) casing positioned such that a rotating component (102) extends therethrough, at least one annular sealing agent (108) configured to radially move with respect to the rotating component (102) between a sealed position and an unsealed position, at least one sensor (112) for gathering atmospheric data, and at least one micro-mechanism (114) configured to control the at least one annular sealing agent (108) based on the atmospheric data.

## Description

### BACKGROUND OF THE INVENTION

The invention relates generally to rotating body technology. More particularly, the invention relates to a seal that self-adjusts according to atmospheric conditions.

Rotating bodies, such as rotors, are used in many different types of mechanical and electrical elements, including generators, motors and other similar devices. A mechanical seal assembly is commonly used on a rotating shaft of a motor enclosed in a motor housing, with the shaft projecting through a seal housing adjacent the motor housing to prevent contaminants from migrating along the shaft and entering the seal and motor housings. Different environmental or atmospheric conditions necessitate different protection levels. Therefore, different seals must be used for different protection levels according to different regulatory standards, environmental changes, or for other reasons. In addition, known seals are contact seals, i.e., the seal is in constant contact with the rotor, and therefore, these seals tend to wear out due to heat and friction over time.

### BRIEF DESCRIPTION OF THE INVENTION

A sealing system that self-adjusts according to atmospheric conditions is disclosed. The sealing system includes an annular seal casing mounted on a stationary component, the annular seal casing positioned such that a rotating component extends therethrough, at least one annular sealing agent configured to radially move with respect to the rotating component between a sealed position and an unsealed position, at least one sensor for gathering atmospheric data, and at least one micro-mechanism configured to control the at least one annular sealing agent based on the atmospheric data. The sealing system disclosed herein can provide different levels of protection depending on atmospheric conditions and a desired level of protection.

A first aspect of the disclosure provides a sealing system comprising: an annular seal casing mounted on a stationary component, the annular seal casing positioned such that a rotating component extends therethrough; at least one annular sealing agent configured to radially move with respect to the rotating component between a sealed position and an unsealed position; at least one sensor for gathering atmospheric data; and at least one micro-mechanism configured to control the at least one annular sealing agent based on the atmospheric data.

A second aspect of the disclosure provides a turbomachine comprising: a stationary component; a rotating component; and a sealing system for use between the stationary component and the rotating component, the sealing system comprising: an annular seal casing mounted on the stationary component, the annular seal casing positioned such that the rotating component extends therethrough; at least one annular sealing agent configured to radially move with respect to the rotating component between a sealed position and an unsealed position; at least one sensor for gathering atmospheric data; and at least one micro-mechanism configured to control the at least one annular sealing agent based on the atmospheric data.

### BRIEF DESCRIPTION OF THE DRAWINGS

FIG. 1 shows a cross-sectional view of a motor as known in the art.
FIG. 2 shows an enlarged perspective view of a portion of a self-adjusting seal according to an embodiment of the invention.
FIG. 3 shows a perspective view of a self-adjusting seal according to an embodiment of the invention.
FIG. 4 shows a cut-away perspective view of a self-adjusting seal according to an embodiment of the invention.
FIG. 5 shows an enlarged cut-away perspective view of a portion of a self-adjusting seal according to an embodiment of the invention.
FIG. 6 shows a schematic representation of a self-adjusting seal system according to an embodiment of the invention.
FIG. 7 shows a flow chart illustrating operation of a self-adjusting seal system according to an embodiment of the invention.

It is noted that the drawings of the invention are not necessarily to scale. The drawings are intended to depict only typical aspects of the invention, and therefore should not be considered as limiting the scope of the invention.

### DETAILED DESCRIPTION OF EMBODIMENTS OF THE INVENTION

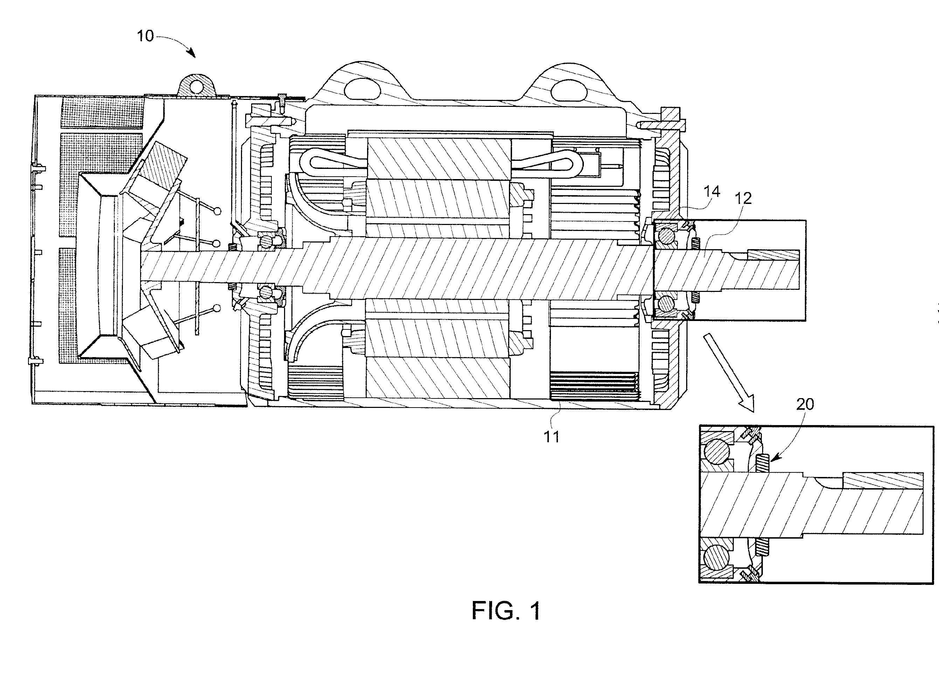

Turning to FIG. 1, a cross-sectional view of a motor 10, within a motor housing 11, is shown. Motor 10 includes a rotating component 12 (i.e., a rotor) partially within motor housing 11, and a stationary component 14. As known in the art, a seal 20 is included between stationary component 14 and rotating component 12. It is understood that while a motor is shown in FIG. 1, embodiments of the invention disclosed herein can be applied to a seal between any type of rotating component and stationary component.

As known in the art, seal 20 is an annular seal mounted on stationary component 14, with rotating component 12 extending through seal 20. Seal 20 acts to prevent contaminants in the atmosphere from migrating along rotating component 12 and entering motor housing 11. Seal 20 is referred to as a contact seal because it is in constant contact with rotating component 12.

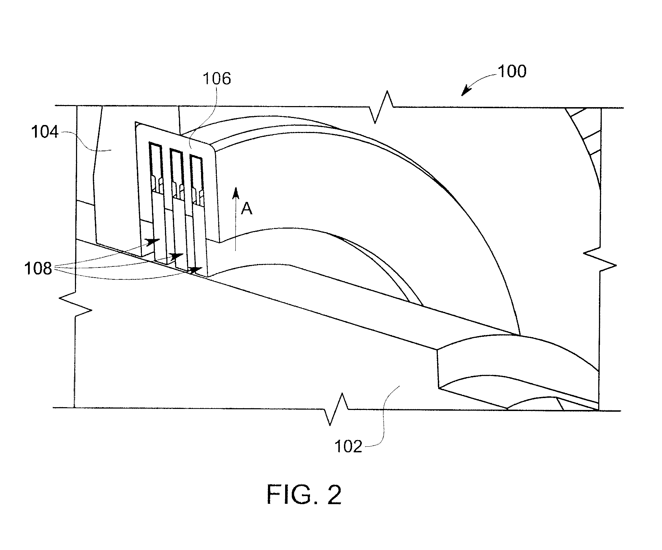

Turning to FIG. 2, a seal 100 according to an embodiment of the invention is shown. As shown in FIG. 2, sealing system 100 is used between a stationary component 104 and a rotating component 102 of a turbomachine, such as motor 10 (FIG. 1). As shown in FIG. 2, sealing system 100 includes an annular seal casing 106 mounted on stationary component 104, with annular seal casing 106 positioned such that rotating component 102 extends through annular seal casing 106.

As also shown in FIG. 2, sealing system 100 includes at least one annular sealing agent 108 positioned at least partially within seal casing 106, with rotating component 102 extending through each sealing agent 108. Each sealing agent 108 is configured to radially move with respect to rotating component 102, as indicated by arrow A in FIG. 2, between a sealed position and an unsealed position. FIG. 2 shows sealing agents 108 in a sealed position, i.e., in contact with rotating component 102, but as discussed in more detail herein, sealing agents 108 are configured to move radially between the sealed position shown in FIG. 2, and an unsealed position, i.e., out of contact with rotating component 102. Sealing agents 108 can comprise any material typically used for seals, such as: rubber, brass, gunmetal, carbon or graphite.

FIG. 2 shows three annular sealing agents 108, but it is understood that more or less sealing agents 108 can be included in sealing system 100 consistent with embodiments of the invention. For example, in one embodiment of the invention, a plurality of sealing agents 108 are included, with each sealing agent 108 configured to provide a different level of sealing protection between rotating component 102 and stationary component 104. For example, sealing agents 108 can be made with different materials to provide different levels of protection from water, dust, chemicals, and other contaminants in the atmosphere. In another embodiment, each sealing agent 108 can be made of similar material, in order to provide cumulative or varying levels, of the same protection. For example, one, two or three similar sealing agents 108 can be activated to provide a desired level of protection.

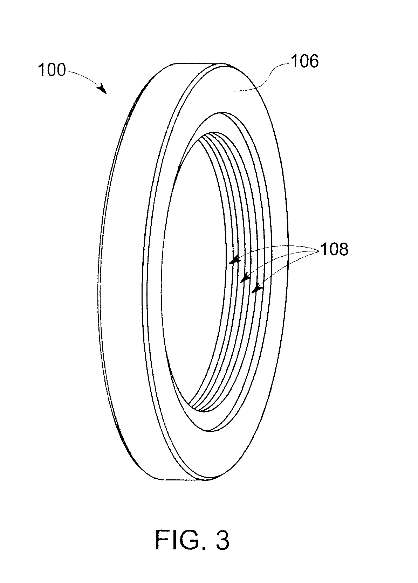

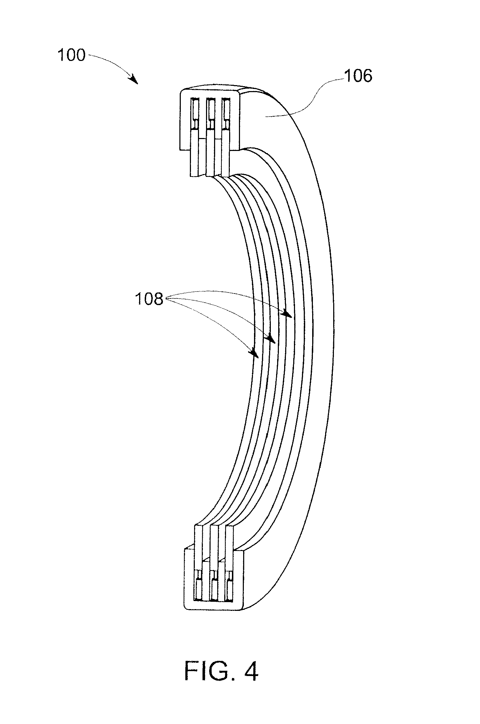

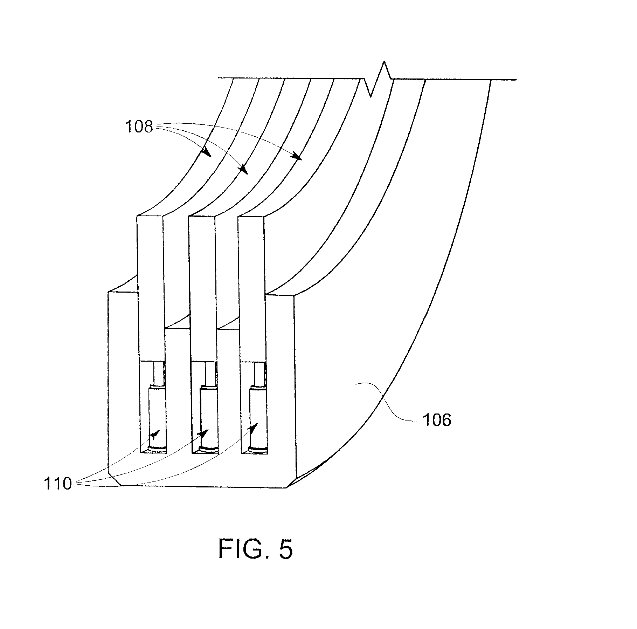

Another view of sealing system 100 is shown in FIG. 3, illustrating the annular, i.e., ring, shape of seal casing 106 and sealing agents 108. FIG. 4 shows another view of sealing system 100, with an exploded view shown in FIG. 5. As shown in FIG. 5, sealing system 100 can further include at least one actuator 110 associated with each sealing agent 108. Each actuator 110 has a first end attached to seal casing 106, and a second end for contacting a corresponding sealing agent 108. Actuators 110 can also be referred to as plungers, because each actuator 110 can be adapted to expand and contract in a plunging motion to move each sealing agent 108 between its sealed position and its unsealed position.

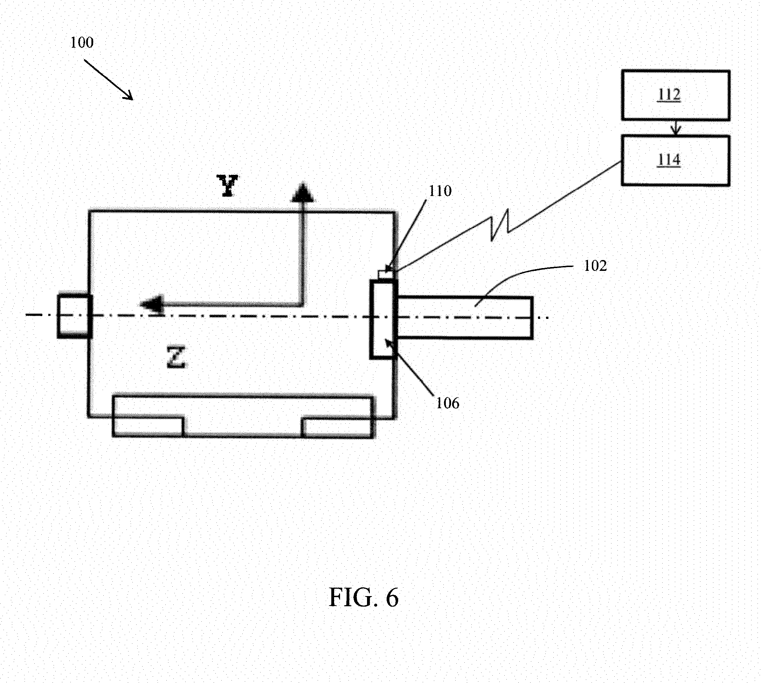

Turning to FIG. 6, a schematic is shown illustrating sealing system 100 in operation. As shown in FIG. 6, sealing system 100 further includes at least one micro-mechanism 114 configured to control annular sealing agents 108 (FIG. 5). Specifically, micro-mechanism 114 is configured to control each actuator 110, which in turn controls each sealing agent 108. Micro-mechanism 114 can comprise any known or later developed control system, for example, a solenoid control system or an electronically regulated pressure system. Micro-mechanism 114 can comprise one mechanism configured to control each actuator 110 (and sealing agent 108), or a plurality of micro-mechanisms 114 can be used, each micro-mechanism 114 configured to control one annular sealing agent 108.

Sealing system 100 further includes at least one sensor 112 for gathering atmospheric data. Sensor 112 can comprise any now known or later developed sensor for gathering atmospheric data. There are any number of commercially available sensors used in various industries that can be used in sealing system 100. For example, a water and/or dust sensor such as a contact image sensor, an electro-optical sensor, an infra-red sensor, an LED light sensor, a Nichols radiometer, a fiber optic sensor, a photodetector, a photodiode, a photomultiplier tube, a photo transistor, a photoelectric sensor, a photoionization detector, a photoresistor, a photoswitch, a proximity sensor, a scintillometer, a Shack-Hartmann, or a wavefront sensor. In addition, or alternatively, a chemical sensor can also be used, such as a breathalyzer, a carbon dioxide sensor, a carbon monoxide detector, a catalytic bead sensor, a chemical field-effect transistor, an electrochemical gas sensor, an electronic nose, an electrolyte-insulator-semiconductor sensor, a hydrogen sensor, a hydrogen sulfide sensor, an infrared point sensor, an ion-selective electrode, a nondispersive infrared sensor, a microwave chemistry sensor, a nitrogen oxide sensor, an olfactometer, an optode, an oxygen sensor, a pellistor, a pH glass electrode, a potentiometric sensor, a redox electrode, a smoke detector or a zinc oxide nanorod sensor.

Sensor 112 can gather information related to a level of specific contaminants in the atmosphere, as desired. For example, a level of contaminants such as water, dust, chemicals, etc. A plurality of sensors 112 can be used to sense a plurality of different contaminants in the atmosphere, or a single sensor 112 can be used. The atmospheric data gathered by sensor(s) 112 is then sent to micro-mechanism(s) 114. Micro-mechanism(s) 114 can then control sealing agent(s) 108 based on the atmospheric data. For example, micro-mechanism(s) 114 can move sealing agent(s) 108 between sealed and unsealed positions as appropriate based on the desired protection level against the specific contaminants in the atmosphere.

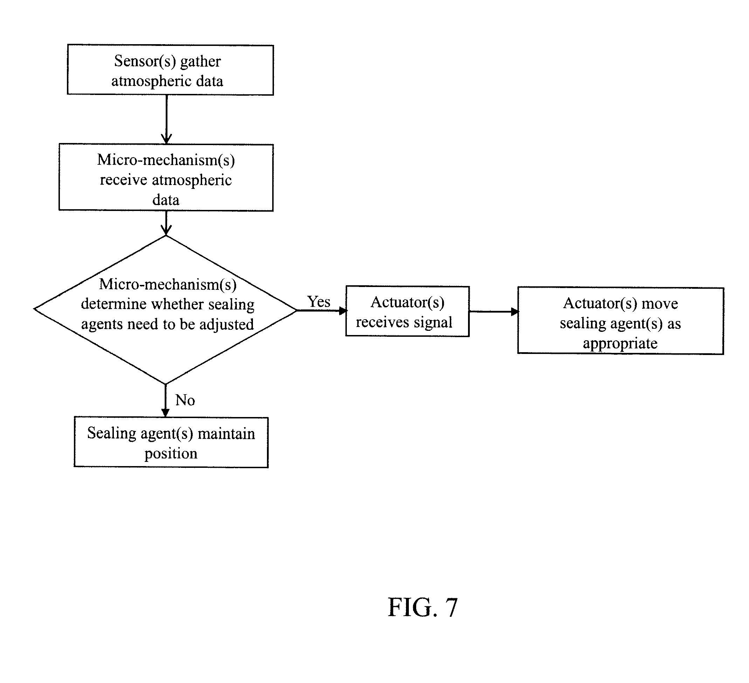

Turning to FIG. 7, a flow chart illustrating the operation of sealing system 100 is shown. First, sensor(s) 112 gather atmospheric data as desired. For example, a level of dust, water or chemicals in the atmosphere. Sensor(s) 112 can then send the atmospheric data to micro-mechanism(s) 114 (or micro-mechanism(s) 114 can query sensor(s) 112 for the data). Using the atmospheric data, micro-mechanism(s) 114 determine whether sealing agents 108 need to be adjusted. If not, micro-mechanism(s) 114 do not send a signal to actuator(s) 110, and sealing agent(s) 108 maintain their position. If yes, micro-mechanism(s) 114 send a signal to actuator(s) 110, and when actuator(s) 110 receive the signal, they contract/expand as appropriate. Actuator(s) 110 then move sealing agent(s) 108 as appropriate.

Sealing system 100 is therefore self-adjusting in that can adjust the level of sealing protection based on atmospheric data gathered by sensor(s) 112. For example, a user can set a level or type of contaminants that are desired to be sealed against, for example, because of specific regulatory standards or environmental conditions. Sealing system 100 determines the level of those contaminants in the atmosphere, and then adjusts sealing agent(s) 108 accordingly. In this way, different sealing agents 108 can be used for different protection levels. This is in contrast to known seals, where the entire seal would need to be replaced to provide a different level of sealing protection.

Because sealing system 100 is not in constant contact with rotating component 102, and because sealing system 100 can include a plurality of different sealing agents 108, sealing system 100 can provide different levels of protection. The different levels of sealing protection of seals (often referred to as Ingress Protection (IP) Standards) are well-known in the industry and can be selected based on a desired level of protection. For example, one sealing agent 108 can comprise material that acts to seal against solid objects greater than 50mm, one sealing agent 108 can comprise material that acts to seal out splashing water, and one sealing agent 108 can comprise material that provides a dust tight seal. Sealing system 100, according to embodiments of the invention, activates only the appropriate sealing agent(s) 108, depending on atmospheric conditions and the user's desired level of protection. For example, if sensor(s) 112 detect negligible water in the atmosphere (i.e., a level of water lower than a tolerance set by a user), then a sealing agent 108 configured to protect against water may not be required, and that sealing agent 108 can be moved into an unsealed position. However, if a high level of chemicals are found in the atmosphere (i.e., a level of chemicals higher than a tolerance set by a user), a sealing agent 108 that is configured to seal against chemicals may be required, and that sealing agent 108 can be moved into the sealed position.

As the sealing agents 108 will be activated (i.e., moved into a sealing position in contact with rotating component 102) only as required, and therefore will not be in constant contact with rotating component 102, the life of the seal and various other components (i.e., bearings) will increase.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context, (e.g., includes the degree of error associated with measurement of the particular quantity).

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A sealing system comprising:
an annular seal casing (106) mounted on a stationary component (104), the annular seal casing (106) positioned such that a rotating component (102) extends therethrough;
at least one annular sealing agent (108) configured to radially move with respect to the rotating component (102) between a sealed position and an unsealed position;
at least one sensor (112) for gathering atmospheric data; and
at least one micro-mechanism (114) configured to control the at least one annular sealing agent (108) based on the atmospheric data.

2. The sealing system of claim 1, further comprising at least one actuator (110) associated with each at least one sealing agent (108), each actuator (110) adapted to expand and contract to move each sealing agent (108) between the sealed position and the unsealed position.

3. The sealing system of claim 2, wherein the at least one micro-mechanism (114) is configured to control the at least one actuator (110).

4. The sealing system of claim 1, 2 or 3, wherein the at least one micro-mechanism (114) comprises one of: a solenoid control system and an electronically regulated pressure system.

5. The sealing system of any one of claims 1 to 4, wherein the at least one sealing agent (108) comprises a material selected from the group consisting of: rubber, brass, gunmetal, carbon and graphite.

6. The sealing system of any one of claims 1 to 5, wherein the at least one annular sealing agent (108) comprises a plurality of annular sealing agents (108).

7. The sealing system of claim 6, wherein each annular sealing agent (108) provides a different level of sealing protection between the rotating component (102) and the stationary component (104).

8. The sealing system of claim 6 or claim 7, wherein the at least one micro-mechanism (114) comprises a plurality of micro-mechanisms (114), each micro-mechanism (114) configured to control one annular sealing agent (108).

9. The sealing system of any one of claims 1 to 8, wherein the atmospheric data comprises data relating to a level of at least one of the following contaminants: water, dust and chemical.

10. The sealing system of any one of claims 1 to 9, wherein in the unsealed position, the at least one sealing agent is not in contact with the rotating component (12).

11. A turbomachine (10) comprising:
a stationary component (104);
a rotating component (102); and
a sealing system of any one of claims 1 to 10, for use between the stationary component (104) and the rotating component (102), the sealing system comprising:
an annular seal casing (106) mounted on the stationary component (104), the annular seal casing (106) positioned such that the rotating component (102).
